# EUROPÄISCHE PATENTSCHRIFT

(11) **EP 2 625 542 B1**
(45) Veröffentlichungstag und Bekanntmachung des Hinweises auf die Patenterteilung: **20.03.2019**
(21) Anmeldenummer: 11770718.2
(22) Anmeldetag: 26.09.2011
(51) Int. Cl.: G01S 7/481, G01S 17/42, G01S 17/89, G02B 26/10, G06K 7/10

(54) **UMLENKSPIEGELANORDNUNG FÜR EINE OPTISCHE MESSVORRICHTUNG UND KORRESPONDIERENDE OPTISCHE MESSVORRICHTUNG**
DEFLECTION MIRROR ASSEMBLY FOR AN OPTICAL MEASUREMENT DEVICE AND CORRESPONDING OPTICAL MEASUREMENT DEVICE
SYSTÈME DE MIROIRS DE DÉVIATION POUR UN DISPOSITIF DE MESURE OPTIQUE ET DISPOSITIF DE MESURE OPTIQUE CORRESPONDANT

(30) Priorität: 08.10.2010 DE 102010047984
(43) Veröffentlichungstag der Anmeldung: 14.08.2013
(73) Patentinhaber: Valeo Schalter und Sensoren GmbH, 74321 Bietigheim-Bissingen (DE)
(72) Erfinder: BAYHA, Heiner, 71665 Vaihingen a. d. Enz (DE); HORVATH, Peter, 74392 Freudental (DE); SCHULER, Thomas, 75446 Wiernsheim (DE)
(86) Internationale Anmeldenummer: PCT/EP2011/066669
(87) Internationale Veröffentlichungsnummer: WO 2012/045603

(56) Entgegenhaltungen:
- EP-A1- 1 760 631
- EP-A2- 1 118 874
- US-A- 3 772 464
- US-A- 5 559 320
- US-B1- 6 243 187
- US-B1- 6 268 947

## Beschreibung

Die Erfindung betrifft eine Umlenkspiegelanordnung für eine optische Messvorrichtung der im Oberbegriff des Anspruchs 1 genannten Art, und eine korrespondierende optische Messvorrichtung mit einer solchen Umlenkspiegelanordnung.

Aus dem Stand der Technik sind abtastende optische Messvorrichtungen, so genannte Laserscanner, für Fahrzeuge zur Erkennung von Objekten bzw. Hindernissen in einem Überwachungsbereich bekannt, welche die Entfernung zu im Überwachungsbereich erkannten Objekten bzw. Hindernissen nach dem Lichtimpulslaufzeitverfahren bestimmen.

In der Patentschrift DE 10 2005 055 572 B4 wird beispielsweise ein abtastender optischer Entfernungssensor beschrieben. Der beschriebene Entfernungssensor umfasst mindestens einen Laser als optischen Sender, mindestens einen Detektor als optischen Empfänger und eine Umlenkeinheit, welche mit einem ersten Spiegel eine erzeugte Laserstrahlung auf die zu vermessende Szene umlenkt, und mit einem zweiten Spiegel die von Objekten zurückgestreuten Laserimpulse auf den mindestens einen Detektor umlenkt. Hierbei sind der erste und zweite Spiegel auf einer gemeinsamen drehbaren Achse angeordnet, welche von einer Antriebseinheit angetrieben wird. Der erste Spiegel ist auf einer ersten Halterung angeordnet und der zweite Spiegel ist axial beabstandet zum ersten Spiegel an einer zweiten Halterung angeordnet, wobei die Antriebseinheit zwischen den beiden Halterungen angeordnet ist. Der mindestens eine Laser und der mindestens eine Detektor mit der zugehörigen Elektronik sind stehend angeordnet.

In der US 5 559 320 A wird eine Sendespiegeleinheit für einen Laser-Barcode-Scanner offenbart, in der eine Antriebseinheit zwischen den Sendespiegeln angeordnet ist. Ein hohles, zylindrisches Spiegelgehäuse, das an einem axialen Ende eine Öffnung aufweist, am anderen axialen Ende geschlossen ist und an den Seitenflächen spiegelnde Oberflächen aufweist, ist über ein zweites zylindrisches Gehäuse gestülpt, in dem die Antriebseinheit eingebettet ist
In der US 3 772 464 A wird eine Empfangsspiegeleinheit für einen optischen Scanner beschrieben. Ein hohles, zylindrisches Spiegelgehäuse, das an einem axialen Ende eine Öffnung aufweist, am anderen axialen Ende geschlossen ist und an den Seitenflächen spiegelnde Oberflächen aufweist, ist auf ein zweites zylindrisches Gehäuse gestülpt, in dem eine Antriebseinheit eingebettet ist.
In der EP 1 118 874 A2 wird eine Umlenkspiegelvorrichtung für eine optische Messvorrichtung beschrieben. Sende- und Empfangsspiegeleinheit weisen jeweils ein zugehöriges Spiegelrad mit umlaufenden spiegelnden Flächen auf. Die genaue Anordnung der Antriebseinheit wird nicht offenbart. Die Umlenkspiegelanordnung ist in einem Gehäuse untergebracht, wobei eine Trennwand das Gehäuse in eine Kammer für die Empfangsspiegelanordnung und eine Kammer für die Sendespiegelanordnung unterteilt. Die Antriebswelle ist in einer Öffnung der Trennwand gelagert. Aufgabe der Erfindung ist es, eine Umlenkspiegelanordnung für eine optische Messvorrichtung dahingehend weiterzuentwickeln, dass eine Reduzierung des erforderlichen Bauraums ermöglicht wird, sowie ein korrespondierende optische Messvorrichtung anzugeben. Diese Aufgabe wird erfindungsgemäß durch eine Umlenkspiegelanordnung für einen Laserscanner mit den Merkmalen des Anspruchs 1 und durch eine optische Messvorrichtung mit den Merkmalen des Anspruchs 6 gelöst. Weitere die Ausführungsformen der Erfindung in vorteilhafter Weise ausgestaltende Merkmale enthalten die Unteransprüche.

Der mit der Erfindung erzielte Vorteil besteht darin, dass durch die Anordnung der Antriebseinheit im Raum zwischen den beiden Umlenkspiegeln der erforderliche Bauraum für die Umlenkspiegelanordnung reduziert werden kann. So kann insbesondere die Bauhöhe der Umlenkspiegelanordnung reduziert werden.

Der Grundgedanke der Erfindung basiert auf der Ausführung einer Spiegeleinheit mit genau zwei in einer horizontalen Ebene beabstandet zueinander angeordneten Spiegeln, zwischen welchen dann die Antriebseinheit angeordnet wird. Des Weiteren wird die beidseitige Lagerung der Spiegeleinheit durch die Anordnung der Spiegel auf einer Trägerplatte bzw. einem Trägerkörper einfacher realisiert.

Eine erfindungsgemäße Umlenkspiegelanordnung für eine optische Messvorrichtung umfasst mindestens eine Spiegeleinheit, welche auf einer drehbaren Achse angeordnet ist und genau zwei Umlenkspiegel umfasst, und eine Antriebseinheit, welche die drehbare Achse antreibt. Erfindungsgemäß umfasst die mindestens eine Spiegeleinheit genau zwei Umlenkspiegel, welche radial beabstandet zur drehbaren Achse angeordnet sind, wobei die Antriebseinheit zumindest teilweise im Raum zwischen den beiden Sendeumlenkspiegeln angeordnet ist.

In der erfindungsgemäßen Anordnung sind die zwei Sendeumlenkspiegel auf einer Trägerplatte angeordnet, wobei die Antriebseinheit in einem Durchbruch der Trägerplatte angeordnet ist. Dadurch wird die beidseitige Lagerung der Spiegeleinheit einfacher umgesetzt und die Abweichungen bei der Drehbewegung reduziert. Zur Vereinfachung der Anordnung der Antriebseinheit im Durchbruch der Trägerplatte, kann am Rand des Durchbruchs ein umlaufender Kragen ausgebildet werden.

Die mindestens eine Spiegeleinheit wird als Sendespiegeleinheit mit genau zwei Sendeumlenkspiegeln und/oder als Empfangsspiegeleinheit mit genau zwei Empfangsumlenkspiegeln ausgeführt.

In der erfindungsgemäßen Anordnung sind eine Sendespiegeleinheit mit genau zwei Sendeumlenkspiegeln, welche radial beabstandet auf der Trägerplatte mit Durchbruch angeordnet sind, und eine Empfangsspiegeleinheit mit genau zwei Empfangsumlenkspiegeln axial beabstandet zueinander auf der gemeinsamen drehbaren Achse angeordnet, wobei die Antriebseinheit im Raum zwischen den beiden Sendeumlenkspiegeln angeordnet ist. Die beiden Empfangsumlenkspiegel werden radial beabstandet jeweils an einer Seite eines Trägerkörpers befestigt. Dadurch wird die beidseitige Lagerung der Empfangsspiegeleinheit einfacher umgesetzt und die Abweichungen bei der Drehbewegung der Empfangsspiegeleinheit reduziert. Zur Erfassung eines aktuellen Drehwinkels kann zwischen der Sendespiegeleinheit und der Empfangsspiegeleinheit unterhalb der Trägerplatte eine Kodierscheibe angeordnet werden, welche zur Bestimmung des Drehwinkels der drehbaren Achse auswertet werden kann.

In weiterer vorteilhafter Ausgestaltung der erfindungsgemäßen Anordnung ist die Antriebseinheit als Schrittmotor ausgeführt. Zudem kann die die drehbare Achse beidseitig gelagert werden, um Wankbewegungen und Abweichungen zu vermeiden.

Die erfindungsgemäße Umlenkspiegelanordnung kann vorzugsweise in einer optischen Messvorrichtung mit mindestens einem optschen Sender und mindestens einem optischen Empfänger eingesetzt werden.

Nachfolgend werden Ausführungsbeispiele der Erfindung anhand einer zeichnerischen Darstellung näher erläutert.

In der Darstellung zeigt:
- Fig. 1: eine perspektivische Darstellung eines Ausführungsbeispiels einer erfindungsgemäßen optischen Messvorrichtung.
- Fig. 2: eine perspektivische Detaildarstellung der optischen Messvorrichtung aus Fig. 1, ohne Gehäuse.
- Fig. 3: eine perspektivische Detaildarstellung der optischen Messvorrichtung aus Fig. 1, ohne Antriebshalterung.
- Fig. 4: eine perspektivische Detaildarstellung der optischen Messvorrichtung aus Fig. 1, ohne Sendereinheit und ohne Antriebseinheit.
- Fig. 5: eine perspektivische Darstellung eines Ausführungsbeispiels einer erfindungsgemäßen Umlenkspiegelanordnung für die optische Messvorrichtung aus Fig. 1.
- Fig. 6: eine weitere perspektivische Darstellung des Ausführungsbeispiels der erfindungsgemäßen Umlenkspiegelanordnung gemäß Fig. 5 aus einem anderen Blickwinkel.

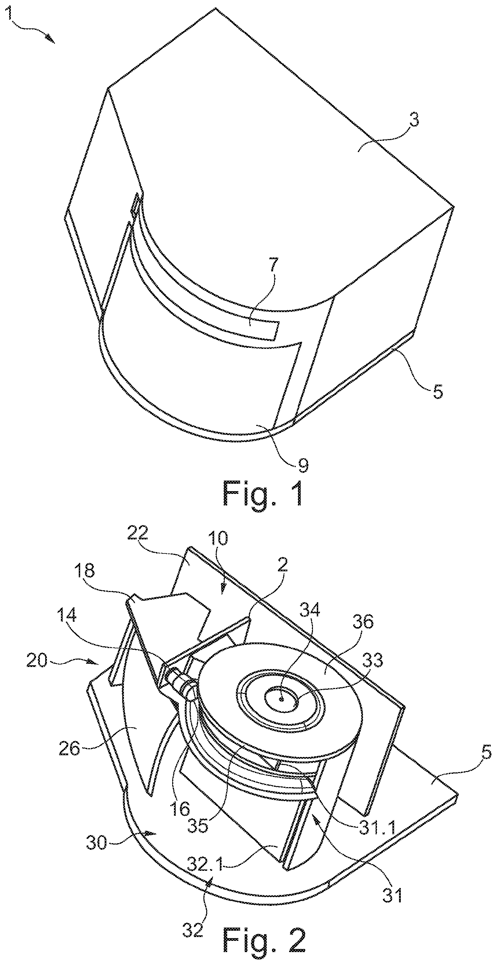

Wie aus Fig. 1 ersichtlich ist, umfasst eine optische Messvorrichtung 1 ein Gehäuse 2 mit einer Bodenplatte 5. Im Gehäuse sind ein Sendefenster 7, durch das beispielsweise gepulstes Laserlicht abgestrahlt wird, und ein Empfangsfenster 9 eingebracht, durch das von Objekten in einem Überwachungsbereich reflektiertes Laserlicht empfangen wird.

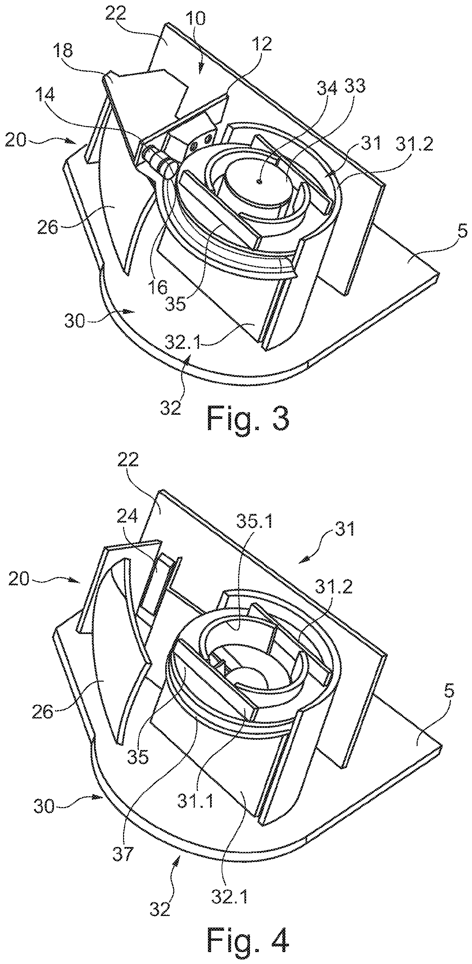

Wie aus Fig. 2 bis 4 ersichtlich ist, sind innerhalb des Gehäuses 3 eine Sendereinheit 10, eine Empfängereinheit 20 sowie eine Umlenkspiegelanordnung 30 angeordnet. Die Sendereinheit 10 umfasst eine Senderplatine 12, auf welcher beispielsweise ein als gepulster Laser ausgeführter optischer Sender 14 mit einer Sendeoptik 16 angeordnet ist. Die Senderplatine 12 ist im dargestellten Ausführungsbeispiel und auf einem Schaltungsträger 18 montiert. Die Empfängereinheit 20 umfasst eine Empfängerplatine 22, auf welcher beispielsweise ein als Detektor ausgeführter optischer Empfänger 24 angeordnet ist, und eine Empfangsoptik 26, welche beispielsweise als Parabolspiegel ausgeführt ist.

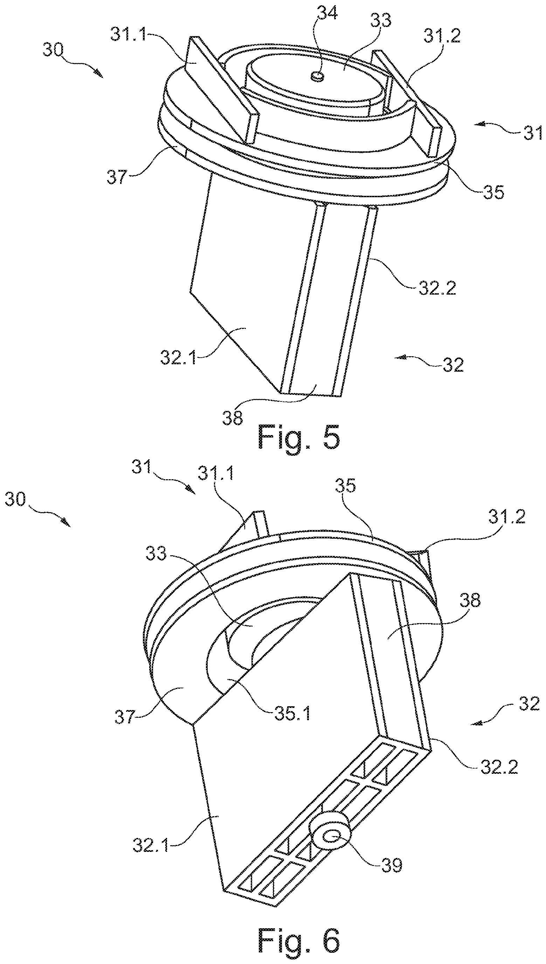

Wie aus Fig. 2 bis 6 ersichtlich ist, umfasst die Umlenkspiegelanordnung 30 im dargestellten Ausführungsbeispiel eine Sendespiegeleinheit 31 mit zwei Sendeumlenkspiegeln 31.1, 31.2, welche in einer gemeinsamen horizontalen Ebene radial beabstandet auf einer Trägerplatte 35 angeordnet sind, und eine Empfangsspiegeleinheit 32 mit zwei Empfangsumlenkspiegeln 32.1, 32.2, welche radial beabstandet jeweils an einer Seite eines Trägerkörpers 38 befestigt sind. Wie aus Fig. 2 bis 6 weiter ersichtlich ist, sind die Sendespiegeleinheit 31 und die Empfangsspiegeleinheit 32 axial beabstandet zueinander auf einer gemeinsamen drehbaren Achse 34 angeordnet.

Erfindungsgemäß ist eine Antriebseinheit 33, welche die drehbare Achse 34 antreibt, im Wesentlichen im Raum zwischen den beiden Sendeumlenkspiegeln 31.1, 31.2 angeordnet. Im dargestellten Ausführungsbeispiel ist die Antriebseinheit 33, in einem Durchbruch 35.1 der Trägerplatte 35 angeordnet. Am Rand des Durchbruchs 35.1 der Trägerplatte 35 ist ein Kragen ausgebildet, um die Aufnahme der Antriebseinheit 33 zu erleichtern. Die Antriebseinheit 33 wird von einer als Deckel ausgeführten Halterung 36 gehalten. Im dargestellten Ausführungsbeispiel ist die Antriebseinheit 33 als Schrittmotor ausgeführt. Alternativ können auch noch andere dem Fachmann bekannte geeignete Motoren und Antriebe für den Antrieb der drehbaren Achse 34 eingesetzt werden.
Zwischen der Sendespiegeleinheit 31 und der Empfangsspiegeleinheit 32 ist unterhalb der Trägerplatte 35 eine Kodierscheibe 37 angeordnet, welche zur Bestimmung des Drehwinkels der drehbaren Achse 34 ausgewertet wird. Zur Auswertung der Kodierscheibe 37 können entsprechende Aufnehmer bzw. Sensoren auf dem Schaltungsträger 18 angeordnet werden. Des Weiteren ist die drehbare Achse 34 beidseitig gelagert. Am oberen Ende ist die drehbare Achse 34 in der Antriebseinheit 33 und am unteren Ende in einem in die Bodenplatte 5 einbringbaren Lager 39 gelagert.
Somit ergibt sich für die optische Messvorrichtung nachfolgend beschriebene Funktionsweise. Der feststehende optische Sender 14 erzeugt gepulste Laserstrahlen, welche über die drehbewegliche Sendespiegeleinheit 31 umgelenkt und durch das Sendefenster 7 in den zu überwachenden Bereich abgestrahlt werden. Über das Empfangsfenster 9 werden gepulste Laserstrahlen empfangen, die in Reaktion auf die ausgesendeten gepulsten Laserstrahlen von Objekte bzw. Hindernissen reflektiert werden, welche im Überwachungsbereich angeordnet sind. Die empfangenen Laserstrahlen werden über die Empfangsspiegeleinheit 32 umgelenkt und von der feststehenden Empfangsoptik 26 zum feststehenden optischen Empfänger 24 geleitet. Das Ausgangssignal des optischen Empfängers 24 wird zur Ermittlung der Laufzeit der Laserstrahlen ausgewertet, um die Entfernung zu einem erkannten Objekt im Überwachungsbereich zu ermitteln.
Der Grundgedanke der Erfindung kann auch bei einer nicht dargestellten Umlenkspiegelanordnung angewendet werden, welche eine Sendespiegeleinheit und eine Empfangsspiegeleinheit aufweist, welche nicht auf einer gemeinsamen Drehachse angeordnet sind, sondern jeweils eine eigene Antriebseinheit aufweisen. Bei einer solchen Ausführungsform wird die Antriebseinheit für die Sendespiegeleinheit, wie im dargestellten Ausführungsbeispiel, im Wesentlichen im Raum zwischen den zwei Sendeumlenkspiegeln angeordnet, welche in einer gemeinsamen horizontalen Ebene radial beabstandet zur drehbaren Achse angeordnet sind. Des Weiteren wird die Antriebseinheit für die Empfangsspiegeleinheit im Wesentlichen im Raum zwischen den zwei Empfangsumlenkspiegeln angeordnet, welche in einer gemeinsamen horizontalen Ebene radial beabstandet zur drehbaren Achse angeordnet sind.

## Patentansprüche

1. Umlenkspiegelanordnung für eine optische Messvorrichtung mit mindestens zwei Spiegeleinheiten (31, 32), welche auf einer drehbaren Achse (34) angeordnet sind, und einer Antriebseinheit (33), welche die drehbare Achse (34) antreibt,
wobei die Umlenkspiegelanordnung mindestens eine Sendespiegeleinheit (31) mit genau zwei Sendeumlenkspiegeln (31.1, 31.2) und eine Empfangsspiegeleinheit (32) mit genau zwei Empfangsumlenkspiegeln (32.1, 32.2) umfasst, wobei Sende- (31) und Empfangsspiegeleinheit (32) axial beabstandet zueinander auf der gemeinsamen drehbaren Achse (34) angeordnet sind,
wobei die zwei Sendeumlenkspiegel (31.1, 31.2) radial beabstandet auf einer Trägerplatte (35) angeordnet sind, wobei die Antriebseinheit (33) zumindest teilweise im Raum zwischen den beiden Sendeumlenkspiegeln (31.1, 31.2) angeordnet ist, wobei die beiden Empfangsumlenkspiegel (32.1, 32.2) radial beabstandet jeweils an einer Seite eines Trägerkörpers (38) befestigt sind und der radiale Abstand der beiden Empfangsumlenkspiegel (32.1, 32.2) zur drehbaren Achse (34) jeweils kleiner ist als der radiale Abstand der beiden Sendeumlenkspiegel (31.1, 31.1) zur drehbaren Achse (34) und wobei die drehbare Achse (34) beidseitig gelagert ist, derart dass ein erstes Ende der drehbaren Achse (34) in der Antriebseinheit (33) und ein zweites Ende der drehbaren Achse (34) in einem Lager (39) gelagert ist.

2. Anordnung nach Anspruch 1,
**dadurch gekennzeichnet,**
**dass** die Antriebseinheit (33) in einem Durchbruch (35.1) der Trägerplatte (35) angeordnet ist.

3. Anordnung nach Anspruch 2,
**dadurch gekennzeichnet,**
**dass** am Rand des Durchbruchs (35.1) der Trägerplatte (35) ein Kragen ausgebildet ist.

4. Anordnung nach einem der vorherigen Ansprüche 1 bis 3,
**dadurch gekennzeichnet,**
**dass** zwischen der Sendespiegeleinheit (31) und der Empfangsspiegeleinheit (32) unterhalb der Trägerplatte (35) eine Kodierscheibe (37) angeordnet ist, welche zur Bestimmung des Drehwinkels der drehbaren Achse (34) auswertbar ist.

5. Anordnung nach einem der vorherigen Ansprüche 1 bis 4
**dadurch gekennzeichnet,**
**dass** die Antriebseinheit (33) als Schrittmotor ausgeführt ist.

6. Optische Messvorrichtung mit mindestens einem optischen Sender (14), mindestens einem optischen Empfänger (24) und einer Umlenkspiegelanordnung (30) mit mindestens zwei Spiegeleinheiten (31, 32), welche auf einer drehbaren Achse (34) angeordnet sind, und einer Antriebseinheit (33), welche die drehbare Achse (34) antreibt,
**dadurch gekennzeichnet,**
**dass** die Umlenkspiegelanordnung (30) nach einem der Ansprüche 1 bis 5 ausgeführt ist.

## Claims

1. Deflection mirror assembly for an optical measuring device, having at least two mirror units (31, 32) which are arranged on a rotatable shaft (34), and a drive unit (33) which drives the rotatable shaft (34),
wherein the deflection mirror assembly comprises at least one transmitting mirror unit (31) having exactly two transmitting deflection mirrors (31.1, 31.2) and a receiving mirror unit (32) having exactly two receiving deflection mirrors (32.1, 32.2), wherein transmitting (31) and receiving mirror unit (32) are arranged axially at a distance from each other on the common rotatable shaft (34),
wherein the two transmitting deflection mirrors (31.1, 31.2) are arranged radially at a distance on a support plate (35),
wherein the drive unit (33) is at least partly arranged in the space between the two transmitting deflection mirrors (31.1, 31.2), wherein the two receiving deflection mirrors (32.1, 32.2) are each fixed radially at a distance on one side of a support body (38), and the radial distance of the two receiving deflection mirrors (32.1, 32.2) to the rotatable shaft (34) is respectively smaller than the radial distance of the two transmitting deflection mirrors (31.1, 31.1) to the rotatable shaft (34), and wherein the rotatable shaft (34) is supported on both sides in such a way that a first end of the rotatable shaft (34) is supported in the drive unit (33), and a second end of the rotatable shaft (34) is supported in a bearing (39) .

2. Assembly according to Claim 1,
**characterized in that**
the drive unit (33) is arranged in an aperture (35.1) in the carrier plate (35).

3. Assembly according to Claim 2,
**characterized in that**
a collar is formed on the rim of the aperture (35.1) in the carrier plate (35).

4. Assembly according to one of the preceding Claims 1 to 3,
**characterized in that**
a code disc (37), which can be evaluated in order to determine the rotational angle of the rotatable shaft (34), is arranged between the transmitting mirror unit (31) and the receiving mirror unit (32), underneath the carrier plate (35).

5. Assembly according to one of the preceding Claims 1 to 4,
**characterized in that**
the drive unit (33) is embodied as a stepping motor.

6. Optical measuring device having at least one optical transmitter (14), at least one optical receiver (24) and a deflection mirror assembly (30) having at least two mirror units (31, 32) which are arranged on a rotatable shaft (34), and a drive unit (33) which drives the rotatable shaft (34),
**characterized in that**
the deflection mirror assembly (30) is embodied in accordance with one of Claims 1 to 5.

## Revendications

1. Système de miroirs de déviation pour un dispositif de mesure optique comportant au moins deux unités de miroirs (31, 32) disposées sur un axe rotatif (34), et une unité d'entraînement (33) qui entraîne l'axe rotatif (34),
dans lequel le système de miroirs de déviation comprend au moins une unité de miroirs d'émission (31) comportant exactement deux miroirs de déviation d'émission (31.1, 31.2) et une unité de miroirs de réception (32) comportant exactement deux miroirs de déviation de réception (32.1, 32.2), dans lequel les unités de miroirs d'émission (31) et de réception (32) sont disposées de manière axialement espacée l'une de l'autre sur l'axe rotatif commun (34),
dans lequel les deux miroirs de déviation d'émission (31.1, 31.2) sont disposés de manière radialement espacée l'un de l'autre sur une plaque support (35), dans lequel l'unité d'entraînement (33) est au moins partiellement disposée entre les deux miroirs de déviation d'émission (31.1, 31.2), dans lequel les deux miroirs de déviation de réception (32.1, 32.2) sont respectivement fixes et espacés radialement d'un côté d'un corps porteur (38) et l'espacement radial des deux miroirs de déviation de réception (32.1, 32.2) par rapport à l'axe rotatif (34) est respectivement inférieur à l'espacement radial des deux miroirs de déviation d'émission (31.1, 31.1) par rapport à l'axe rotatif (34) et dans lequel l'axe rotatif (34) est supporté des deux côtés de manière à ce qu'une première extrémité de l'axe rotatif (34) soit supportée dans l'unité d'entraînement (33) et à ce qu'une seconde extrémité de l'axe rotatif (34) soit supportée dans un palier (39).

2. Système selon la revendication 1, **caractérisé en ce que** l'unité d'entraînement (33) est disposée dans une ouverture traversante (35.1) de la plaque de support (35) .

3. Système selon la revendication 2, **caractérisé en ce qu'**un collier est formé sur le bord de l'ouverture (35.1) de la plaque de support (35).

4. Système selon l'une des revendications 1 à 3 précédentes, **caractérisé en ce qu'**un disque codeur (37) est disposé entre l'unité de miroirs d'émission (31) et l'unité de miroirs de réception (32) sous la plaque de support (35) et peut être analysé afin de déterminer l'angle de rotation de l'axe rotatif (34).

5. Système selon l'une des revendications précédentes 1 à 4, **caractérisé en ce que** l'unité d'entraînement (33) est réalisée sous la forme d'un moteur pas-à-pas.

6. Dispositif de mesure optique comprenant au moins un émetteur optique (14), au moins un récepteur optique (24) et un système de miroirs de déviation (30) comportant au moins deux unités de miroirs (31, 32) qui sont disposées sur un axe rotatif (34), et une unité d'entraînement (33) qui entraîne l'axe rotatif (34), **caractérisé en ce que** le système de miroirs de déviation (30) est réalisé selon l'une des revendications 1 à 5.
